# EUROPEAN PATENT APPLICATION

(11) **EP 1 193 440 A1**
(43) Date of publication of application: **03.04.2002**
(21) Application number: 00121583.9
(22) Date of filing: 02.10.2000
(51) Int. Cl.: F21S 8/10, B60Q 1/14

(54) **Headlamp for vehicle**

(71) Applicant: Stanley Electric Co., Ltd., Meguro-ku Tokyo (JP)
(72) Inventor: Oyama, Hiroo, c/o Stanley Electric Co., Ltd., Meguro-ku, Tokyo (JP); Akutagawa, Takashi, c/o Stanley Electric Co., Ltd., Mrguro-ku, Tokyo (JP)
(74) Representative: Twelmeier, Ulrich, Dipl.Phys.

(57) **Abstract**

A headlamp for a vehicle having at least one light guide mechanism composed (50) of an elliptic reflector (2) which is formed generally in a half part along the major axis, a light source (3) which is disposed at a first focal point (f1) thereof and a shielding plate (4) which is disposed so that a plate surface thereof is provided along the major axis (z) of the elliptic reflector (2), a surface thereof facing the elliptic reflector constitute an inner-face mirror part (4b) and an end part thereof is positioned in the vicinity of the second focal point to consitute a shielding part (4a). By the inner-face mirror part (4b) of the light guide mechanims (50), a part of light which is usually ineffective when a luminous intensity distribution for passing-by is generated can be collected by reflection.

## Description

### BACKGROUND OF THE INVENTION

### 1. Field of the Invention

The present invention relates to a headlamp for a vehicle. Specifically, the present invention relates to a constitution of a headlamp for a vehicle for use in a lighting fixture such as a headlamp, fog lamp or the like.

### 2. Detailed Description of the Prior Art

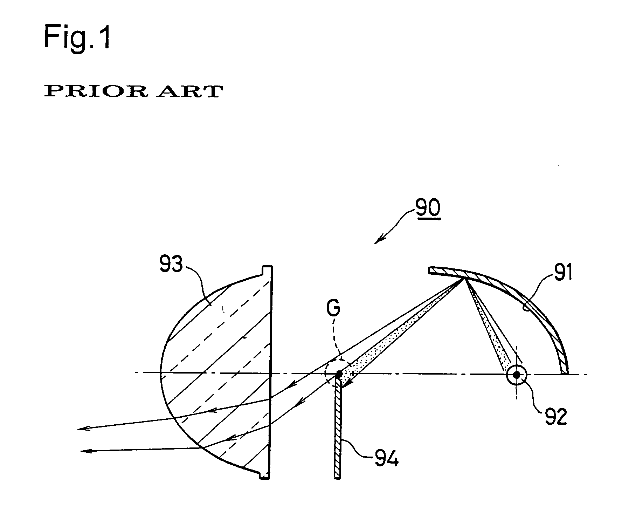

Fig. 1 shows a constitution of a conventional headlamp for a vehicle of this kind using a projector-type headlamp 90 as an example. The headlamp 90 is composed of a reflection mirror 91, a light source 92, a projector lens 93 and a shielding plate 94. The reflection mirror 91 is constituted by an elliptic reflector such as a spheroid or the like. The light source 92 is disposed at the position of a first focal point of this reflection mirror 91. The projector lens 93 projects ahead an image G of the light source 92 imaged at a second focal point of the reflection mirror 91. The shielding plate 94 is disposed in the vicinity of the second focal point of the reflection mirror 91 so as to form a luminous intensity distribution for passing-by (or a low-beam luminous intensity distribution). That is, the shielding plate 94 shields generally the lower half of the light source image G generated at the second focal point of the reflection mirror 91 so that a part of the light which becomes upward light upon projection is prevented from being projected by the projector lens 93. Consequently, a luminous intensity distribution for passing-by which does not give dazzling to a car coming from the opposite direction can be obtained.

In the conventional headlamp 90 of the above-described constitution, generally a half of the light source image G generated at the second focal point is shielded to obtain a luminous intensity distribution for passing-by. Therefore, a problem occurs that the quantity of light which the headlamp 90 effectively uses to irradiate ahead naturally becomes generally a half of the total quantity of light from the light source 92. In other words, a luminous flux efficiency becomes low.

In recent years, as the aforementioned light source 92, a discharge lamp such as a metal halide discharge lamp or the like is used. In this case, light radiated downward from the light source 92 may be colored. Since a illumination light for a vehicle is required to be in monochrome, the reflection mirror 91 is constituted substantially only by the upper half part. Thus, the luminous flux efficiency further decreases.

Further, in a projector-type headlamp 90 of this kind, the enlarged (2 - 4 times) image G of the light source 92 imaged at the second focal point is projected by the projector lens 93. Therefore, another problem occurs that the distant visibility is low because the central brightness irradiating the front of this headlamp 90 is low.

### SUMMARY OF THE INVENTION

Accordingly, to solve the above problems in the prior art, an object of the present invention is to provide a headlamp for a vehicle with which a shielded part of light can be utilized by reflection without decreasing a luminous flux efficiency. Another object of the present invention is particularly to provide a headlamp for a vehicle capable of forming a luminous intensity distribution for passing-by which does not decrease a quantity of light.

In order to achieve the above objects, the present invention provides a headlamp for a vehicle comprising a light source and at least one light guide mechanism which is composed of an elliptic reflector and a shielding plate, wherein the elliptic reflector is generally halved along the major axis, the light source is disposed at the position of a first focal point thereof, a plate surface of the shielding plate is disposed along the major axis of the elliptic reflector, a surface facing the elliptic reflector is subjected to a reflection treatment to constitute an inner-face mirror, and the end part thereof is positioned in the vicinity of a second focal point of the elliptic reflector to constitute a shielding part.

The shielding part of the shielding plate in the light guide mechanism preferably has a constitution such that it can move at least between the position where it shields the light source image generated at the second focal point and the position where it does not shield the light source image.

The shielding plate may be bent.

A complex elliptic reflector divided in the direction generally along the optical axis may be employed as the elliptic reflector.

It is preferable that a projector lens assuming this second focal point as generally a focal point is coaxially provided on the side of the second focal point of the elliptic reflector in the light guide mechanism.

On the side of the second focal point of the elliptic reflector in the light guide mechanism, there may be provided a parabolic reflector which has a focal point at an approximate position of this second focal point and has an optical axis generally in the irradiation direction.

Light which is usually shielded and becomes ineffective when a luminous intensity distribution for passing-by is generated can be collected by the headlamp for a vehicle in the above constitution of the present invention. Therefore, the decrease in a quantity of light in a luminous intensity distribution for passing-by, which is employed during most of the travelling time at night under the current traffic situation, is prevented and an excellent effect is made on the improvement in performance of a headlamp for a vehicle of this kind such as improvement of visibility and the like.

### BRIEF DESCRIPTION OF THE DRAWINGS

These and other objects and advantages of the present invention will become clear from the following description with reference to the accompanying drawings, wherein:
Fig. 1 is a cross-sectional view showing a headlamp for a vehicle of the prior art;
Fig. 2 is a cross-sectional view showing a headlamp for a vehicle of a first embodiment according to the present invention in a luminous intensity distribution state for passing-by;
Fig. 3 is an illustration showing a state of an image generated at the second focal point in the luminous intensity distribution for passing-by;
Fig. 4 is a cross-sectional view showing the first embodiment in a luminous intensity distribution state for driving;
Fig. 5 is an illustration showing a state of an image generated at the second focal point in the luminous intensity distribution for driving;
Fig. 6 is a front view showing a headlamp for a vehicle of a second embodiment according to the present invention;
Fig. 7 is a cross-sectional view taken along line A-A in Fig. 6;
Fig. 8 is an illustration showing an action of the second embodiment;
Fig. 9 is a cross-sectional view showing a headlamp for a vehicle of a third embodiment according to the present invention;
Fig. 10 is a perspective view showing an essential part of a headlamp for a vehicle of a fourth embodiment according to the present invention;
Fig. 11 is a plan view showing an essential part of a headlamp for a vehicle of a fifth embodiment according to the present invention;
Fig. 12 is an illustration showing an action of the fifth embodiment; and
Fig. 13 is a plan view showing an essential part of a headlamp for a vehicle of a sixth embodiment according to the present invention.

### DETAILED DESCRIPTION OF THE PREFERRED EMBODIMENTS

The present invention will be described in detail below with reference to embodiments shown in the drawings. It is noted that terms referring to directions such as front, back, right, left and vertical in the present specification are based on a vehicle to which a headlamp is installed unless otherwise defined.

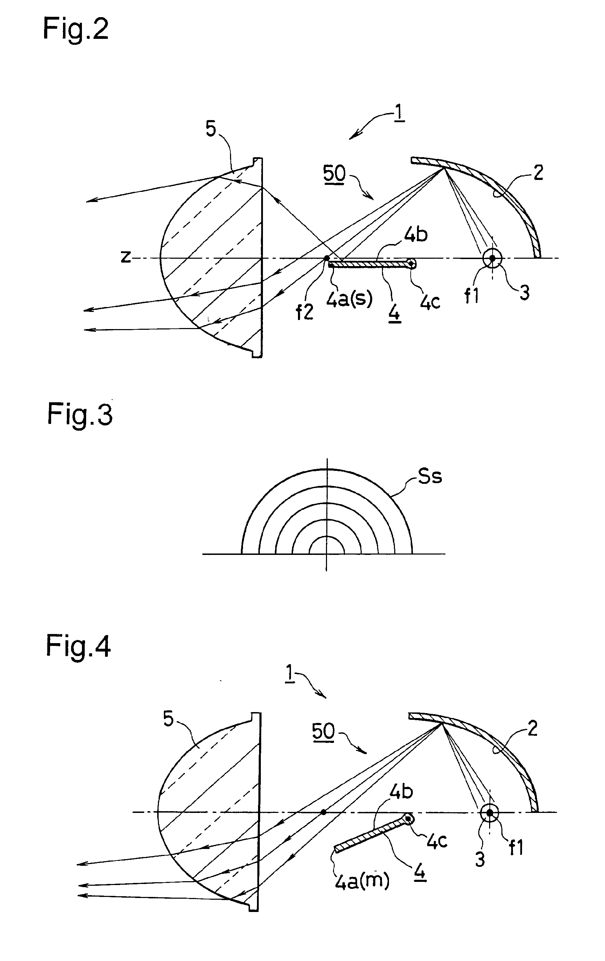

In Figs. 2 - 5, reference numeral 1 denotes a headlamp for a vehicle of a first embodiment according to the present invention. This first embodiment exemplifies a projector-type headlamp or a fog lamp to which the present invention is applied.

In the first embodiment, the headlamp 1 for a vehicle is composed of a light source 3, a light guide mechanism 50 comprising an elliptic reflector 2, and shielding plate 4, and a projector lens 5. The elliptic reflector 2 is constituted by an elliptic reflector such as a spheroid having a first focal point f1 and a second focal point f2 and has a shape of a half part of the spheroid when generally halved along the major axis z. The light source 3 is disposed at the first focal point f1 of the elliptic reflector 2. The shielding plate 4 is a plane plate and its plate surface is provided along the major axis z. The whole plate is disposed between the first focal point f1 and the second focal point f2. One end part thereof is disposed in the vicinity of the second focal point f2 to constitute a shielding part 4a. These constitute the light guide mechanism 50. The projector lens 5 has a focal point in the vicinity of the second focal point f2 of the elliptic reflector 2 in the light guide mechanism 50 and is disposed coaxially with the major axis z.

In the light guide mechanism 50, a surface of the shielding plate 4 facing the elliptic reflector 2 is subjected to a reflection treatment by vacuum deposition of aluminum or the like to constitute an inner-face mirror part 4b. In the first embodiment, the shielding plate 4 is pivotally mounted on the side of the other end part 4c. The shielding part 4a can rotate between a position s for passing-by (see Fig. 2) and a position m for driving (see Fig. 4) by using this other end part 4c as a center of rotation.

With the headlamp 1 for a vehicle of the present invention in the above constitution, light which becomes upward light after projected from the projector lens 5 to the outside is shielded by the shielding part 4a when the shielding plate 4 is set at the position s for passing-by as shown in Fig. 2. Thus, a luminous intensity distribution for passing-by containing no upward light can be obtained as is the case with a projector-type headlamp of the prior art.

The situation of the light shielded by the shielding plate 4 will be described below. In the present invention, an inner-face mirror part 4b is formed on the shielding plate 4. Therefore, light which has reached the shielding plate 4 is reflected at the inner-face mirror part 4b and returned. Then, the light is imaged at the position of the second focal point f2 in an inverted state.

A part of light which is not shielded by the shielding plate 4 is also imaged at the position of the second focal point f2. Therefore, this image and the image generated by reflection from the inner-face mirror part 4b overlap generally at the same position and form an image Ss in a semicircular shape when all the light from the elliptic reflector is imaged 2 as shown in Fig. 3 as a schematic diagram. Consequently, the obtained image has an area generally halved and a brightness almost doubled. Since this shape is inverted vertically and laterally and projected in the irradiation direction by the projector lens 5, a luminous intensity distribution for passing-by similar to that of the prior art can be obtained.

According to the headlamp 1 for a vehicle of the present invention, since the image Ss of the light source 3 having a halved area and a doubled brightness is projected by the projector lens 5, the total quantity of light is generally doubled. Therefore, the obtained luminous intensity distribution property for passing-by has more brightness as a whole. Furthermore, the central part of the luminous intensity distribution property, that is, the brightness in the direction of the front of the vehicle is also substantially improved and the performance such as the distant visibility and the like is also improved.

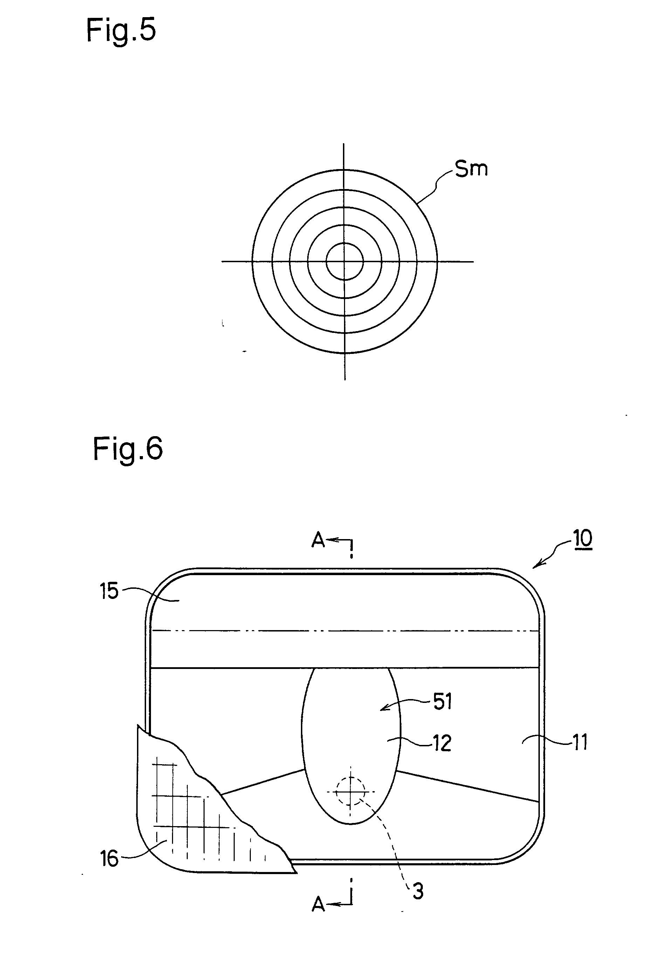

When the shielding plate 4 is rotated to the position m for driving as shown in Fig. 4, that is, the position where it does not shield light from the elliptic reflector 2, the light from the elliptic reflector 2 is not shielded. Therefore, an image Sm in a circular shape is made incident to the projector lens 5 as shown in Fig. 5 as a schematic diagram. At this time, a luminous intensity distribution for driving also including upward light can be obtained. The total quantity of the light reflected from the elliptic reflector 2 can be used at this time as well.

In the application of the first embodiment, the shielding plate 4 may be movable as described above so as to switch between the luminous intensity distribution for passing-by and the luminous intensity distribution for driving. However, even only by using the position s for passing-by, a remarkable action and effect such as increase in the total quantity of light, improvement of visibility and the like can be obtained as described above. Therefore, the shielding plate 4 may be fixed at this position to provide a headlamp for a vehicle exclusively used for passing-by.

Figs. 6 - 8 show a second embodiment of the present invention. In the second embodiment, a headlamp 10 for a vehicle has a first parabolic reflector 11 such as a paraboloid of revolution or the like which directs the optical axis x in the irradiation direction. A light source 3 is disposed in the vicinity of a focal point f3 of the first parabolic reflector 11. A luminous intensity distribution for passing-by is obtained by the first parabolic reflector 11, the light source 3 and a lens 16 (lens cuts thereof) by a known method.

Conventionally, there is provided a hood for preventing dazzling light due to light directly radiated from the light source to the outside of a headlamp for a vehicle. In the headlamp 10 for a vehicle in the above constitution, however, there is provided a light guide mechanism 51 instead of a hood.

The elliptic reflector 12 constituting this light guide mechanism 51 has a first focal point f1 at the position where the light source 3 is disposed. The elliptic reflector 12 has a shape of, for example, a half of a spheroid when generally halved along the major axis z as is the case with the first embodiment and covers the light source 3 from the front. Therefore, the above described radiation of direct light to the outside of the headlamp 10 for a vehicle is prevented while light from the light source 3 is not prevented from reaching the first parabolic reflector 11.

A second focal point f2 of the elliptic reflector 12 is set so as to be positioned at the back of and above the light source 3. As in the case of the first embodiment, there is provided a shielding plate 14 constituted such that one end part is positioned in the vicinity of the second focal point f2 to constitute a shielding part 14a and the whole plate is disposed between the first focal point f1 and the second focal point f2. A surface of this shielding plate 14 facing the elliptic reflector 12 is formed as an inner-face mirror 14b and the shielding part 14a side is rotatably provided to constitute a light guide mechanism 51.

In addition, in the second embodiment, there is provided a second parabolic reflector 15 having a focal point f4, which generally coincides with the second focal point f2 of the elliptic reflector 12. The optical axis y of the second parabolic reflector 15 is provided in the direction of irradiation of the headlamp 10 for a vehicle, that is, generally in the same direction of the first parabolic reflector 11.

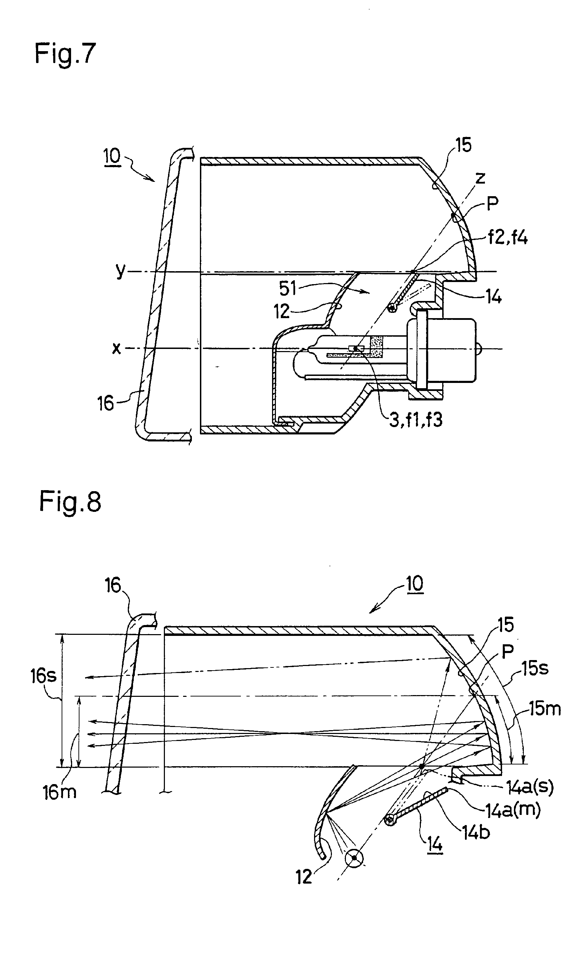

Fig. 8 is a view illustrating a state of light reaching the second parabolic reflector 15 when the shielding plate 14 is rotated. When the shielding plate 14 is set at the position m for driving, light which is reflected on the elliptic reflector 12 and directed to the second focal point f2 is not shielded at all. Therefore, the light reflected from the elliptic reflector 12 rarely reaches above the point P where the major axis z of the elliptic reflector 12 and the second parabolic reflector 15 cross. The light is restricted in the range 15m of the second parabolic reflector 15 as shown in Fig. 8.

When the shielding plate 14 is rotated towards a position s for passing-by and the shielding plate 14 reaches the position where reflected light is shielded, the light is reflected on the inner-face mirror 14b. Finally, the light reaches the range 15s, that is, the entire surface of the second parabolic reflector 15. Since the second parabolic reflector 15 is a parabolic reflector such as a paraboloid of revolution or the like where its focal point f4 is positioned generally at the same position as the aforementioned second focal point f2, light reflected from the second parabolic reflector 15 is a parallel light beam generally in parallel with the optical axis y.

Therefore, the position where light is reflected by the second parabolic reflector 15 is correlative with the transmission position on the lens 16 surface. When light is reflected only in the range 15m of the second parabolic reflector 15, the light passes only through the range 16m of the lens surface. When light is reflected on the entire surface of the second parabolic reflector 15, that is, the range 15s, the light passes through the entire lens 16 surface (range 16s).

Therefore, if the range 16m on the lens 16 surface has no lens cuts or negligible lens cuts which do not affect the luminous intensity distribution, spotlight-like light irradiating ahead in front, that is, a luminous intensity distribution for driving can be obtained. When the shielding plate 14 is moved to a position s for passing-by, a part of light generating upward light is reflected at the inner-face mirror part 14b and projected as an invert image. Since downward light passes through the entire lens 16 surface, a luminous intensity distribution for passing-by can be obtained.

Therefore, in the constitution of the second embodiment, a luminous flux in the irradiation direction suitable both for a luminous intensity distribution for driving and a luminous intensity distribution for passing-by can be obtained only by moving the shielding plate 14 as is the case with the first embodiment. Also, almost the total quantity of light from the light source can be utilized. At this time, the range 16s on the lens 16 surface may have lens cuts so as to obtain an irradiation width in the horizontal direction or be further corrected to have an optimal luminous intensity distribution property.

If the shielding plate 14g is appropriately protruded to the side of the second parabolic reflector 15 beyond the second focal point f2 and this shielding plate 14 is set at a position s for passing-by, it is possible that light does not reach the range 15m on the second parabolic reflector 15. Consequently, switching between the luminous intensity distribution for passing-by and the luminous intensity distribution for driving can be more precisely performed.

As described above, according to the second embodiment, light which is conventionally shielded by a hood and ineffective can be collected on the elliptic reflector 12 in the light guide mechanism 51 and converted to irradiation light on the second parabolic reflector 15. Therefore, even when a light source having the same brightness is used, a quantity of irradiation light increases and a brighter headlamp 10 for a vehicle can be achieved. In addition, even when a headlamp 10 for a vehicle has a single light source 3, switching between the luminous intensity distribution for passing-by and the luminous intensity distribution for driving is possible without using a constitution requiring a high accuracy in movement of the light source 3 or the like because the shielding plate 14 is made movable. It is needless to say that there is no loss of light in this light guide mechanism 51 of the second embodiment as well.

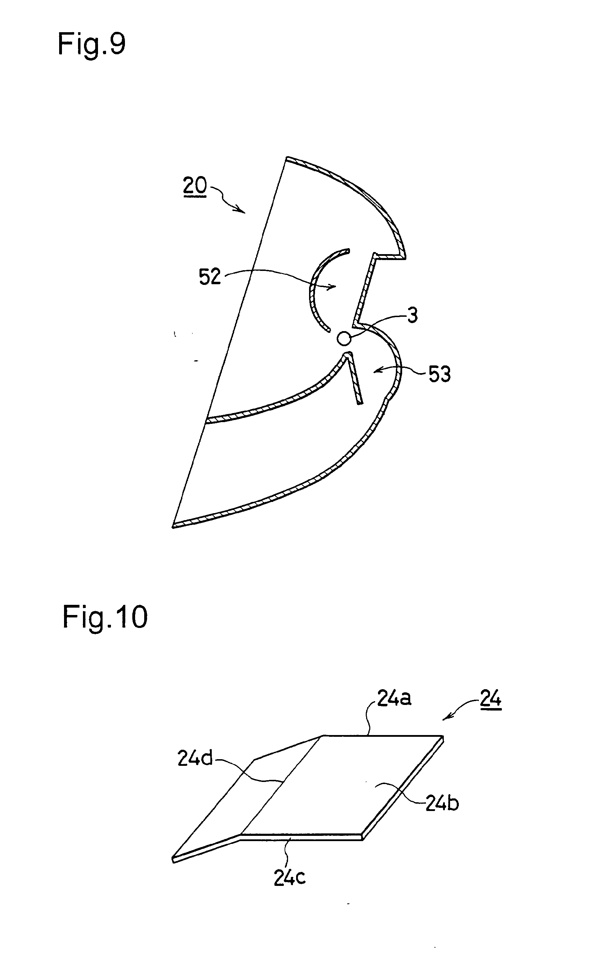

Fig. 9 shows a third embodiment of the present invention. Both the first and second embodiments exemplify a headlamp 1, 10 for a vehicle having a single light guide mechanism 50, 51. However, the present invention is not limited to this type. As shown in the figure, two light guide mechanisms 52, 53 sharing a single light source 3 may be provided in a headlamp 20 for a vehicle, for example, to divide light vertically. Consequently, a headlamp 20 for a vehicle having a vertical height greater than a lateral width, which has been conventionally impossible, can be provided.

Fig. 10 shows an essential part of a fourth embodiment of the present invention. In any of the above embodiments, the shielding plate 4, 14 is formed as a plane plate. However, the present invention is not limited to this type. In this embodiment, the shielding plate 24 is bent at a folding line 24d to obtain an action of positively increasing the quantity of light on the shoulder side as is the case with the shielding plate of a projector-type headlamp of the prior art.

At this time, the folding line 24d for bending is formed generally in parallel with the major axis z of the aforementioned elliptic reflector (not shown in this figure; see Fig. 2). When this shielding plate 24 is assembled, the end part closer to the second focal point f2 constitutes a shielding part 24a and a surface facing the elliptic reflector constitutes an inner-face mirror part 24b as is the case with the above embodiments. This shielding plate 24 may be pivotally mounted by the other end part 24c or the like to be movable or fixed.

Thus, by modifying the shape of the shielding plate, the shape of a border between light and shade, that is, the upper end part of the luminous intensity distribution property in the luminous intensity distribution for passing-by can be flexibly set and a required luminous intensity distribution property can be obtained. Also, the luminous intensity distribution shape can be set in a highly accurate manner. Therefore, the performance as a headlamp for a vehicle can be further improved.

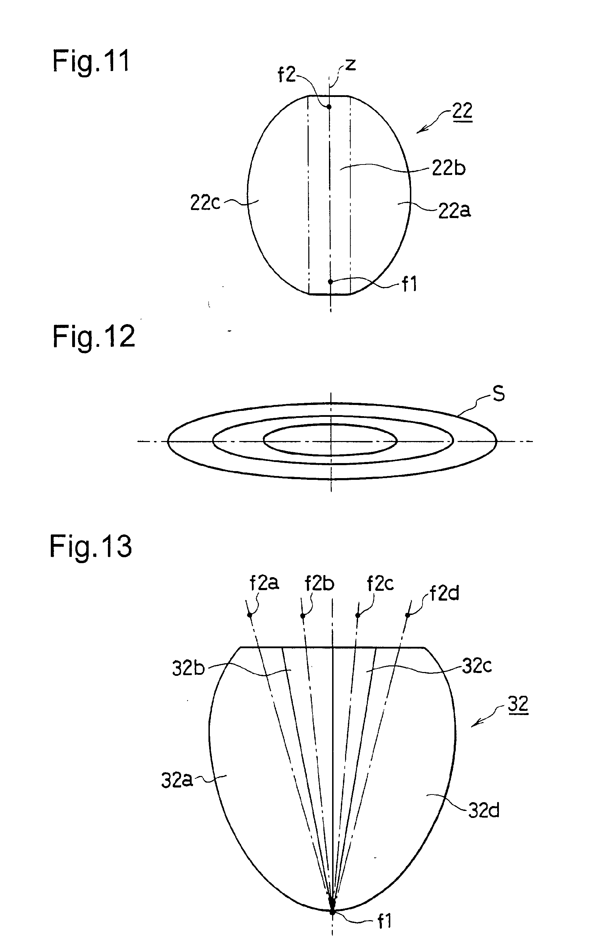

Figs. 11 - 13 show fifth and sixth embodiments of the present invention. In these embodiments, the light distributing characteristic as a headlamp for a vehicle can be further improved by modifying, for example, the shape of the elliptic reflector 2, 12 or the like described in the first, second and third embodiments.

In a headlamp 1 for a vehicle, a luminous intensity distribution property which is vertically narrow and laterally wide is preferable in all aspects including improvement of visibility, prevention of dazzling and the like.

Since the above points are considered in the present invention, the first reflector is constituted by an elliptic reflector 22 divided into 3 segments along the major axis z as shown in Fig. 11. At this time, the divided right side part 22a and left side part 22c are formed by a spheroid or the like having a first focal point f1 and a second focal point f2 as focal points as is the case with any of the above embodiments. The central part 22b is formed by an elliptic columnar surface where an ellipse having the first focal point f1 and the second focal point f2 as focal points is generated in the direction in parallel with the major axis z and a straight line is generated in the direction orthogonal with the major axis z.

Therefore, light reflected at the central part 22b is not reflected in the lateral direction in a state shown in the figure and reflected at an angle of radiation from the light source. The luminous flux S generated at the second focal point f2 of the elliptic reflector 22 is vertically narrow and laterally wide as shown in Fig. 12. This shape is optimal to form a light distributing characteristic of a headlamp or fog lamp for a vehicle.

As shown in Fig. 13, the elliptic reflector 32 can be divided into radial segments 32a - 32d using the first focal point f1 as an origin to constitute an elliptic reflector 32 having second focal points f2a - f2d each on the axis of each segment. At this time, a luminous flux S which is vertically narrow and laterally wide can be obtained as shown in Fig. 12. Either of the above elliptic reflectors may be used as a reflector. Further, a luminous flux S having a similar luminous intensity distribution property may be obtained by a free curved surface.

While the presently preferred embodiments of the present invention have been shown and described, it will be understood that the present invention is not limited thereto, and that various changes and modifications may be made by those skilled in the art without departing from the scope of the invention as set forth in the appended claims.

## Claims

1. A headlamp for a vehicle comprising a light source and at least one light guide mechanism composed of an elliptic reflector and a shielding plate, wherein
the elliptic reflector is formed in generally a half part along the major axis and the light source is disposed at the position of a first focal point thereof, and
the shielding plate is disposed such that a plate surface thereof is provided along the major axis of the elliptic reflector, a surface facing the elliptic reflector is subjected to a reflection treatment to constitute an inner-face mirror part, and an end part thereof is positioned in the vicinity of a second focal point of the elliptic reflector to constitute a shielding part.

2. The headlamp for a vehicle according to claim 1, wherein the shielding part of the shielding plate in the light guide mechanism can move at least between the position where it shields a light source image generated at the second focal point and the position where it does not shield the light source image.

3. The headlamp for a vehicle according to claim 1 or 2, wherein the shielding plate is bent.

4. The headlamp for a vehicle according to any one of claims 1 - 3, wherein the elliptic reflector is divided in the direction generally along the optical axis to constitute a complex elliptic reflector.

5. The headlamp for a vehicle according to any one of claims 1 - 4, wherein, on the side of the second focal point of the elliptic reflector in the light guide mechanism, a projector lens assuming the second focal point as an approximate focal point is coaxially provided.

6. The headlamp for a vehicle according to any one of claims 1 - 4, wherein, on the side of the second focal point of the elliptic reflector in the light guide mechanism, a parabolic reflector which assumes the second focal point as an approximate focal point and has an optical axis generally in the irradiation direction is provided.
